# EUROPÄISCHE PATENTSCHRIFT

(11) **EP 2 864 184 B1**
(45) Veröffentlichungstag und Bekanntmachung des Hinweises auf die Patenterteilung: **10.08.2016**
(21) Anmeldenummer: 13725279.7
(22) Anmeldetag: 25.05.2013
(51) Int. Cl.: G08G 1/16, B62D 15/02

(54) **VERFAHREN ZUM BETRIEB EINES KRAFTFAHRZEUGS UMFASSEND EIN EINPARKASSISTENZSYSTEM**
METHOD TO OPERATE A VEHICLE COMPRISING A PARKING ASSITANCE SYSTEM
METHODE PERMETTANT DE FAIRE FONCTIONNER UN VÉHICLE EQUIPE D'UN SYSTÈME D'ASSISTANCE AU PARCAGE

(30) Priorität: 20.06.2012 DE 102012012265
(43) Veröffentlichungstag der Anmeldung: 29.04.2015
(73) Patentinhaber: Audi AG, 85045 Ingolstadt (DE)
(72) Erfinder: HARTMANN, Jürgen, 91468 Gutenstetten (Pahres) (DE)
(74) Vertreter: Thielmann, Frank
(86) Internationale Anmeldenummer: PCT/EP2013/001549
(87) Internationale Veröffentlichungsnummer: WO 2013/189563

(56) Entgegenhaltungen:
- DE-A1-102007 036 251
- DE-A1-102009 028 760
- US-A1- 2011 080 304

## Beschreibung

Die Erfindung betrifft ein Verfahren zum Betrieb eines Kraftfahrzeugs umfassend ein Einparkassistenzsystem mit einem Systemsteuergerät, das während der assistierten Durchführung eines Einparkvorgangs ein oder mehrere Informationen von anderen Steuergeräten oder Aggregaten empfängt, sowie umfassend einen Verbrennungsmotor, wobei bei einem Wiederstart des zuvor während des laufenden Einparkvorgangs stehengebliebenen Verbrennungsmotors auf die zuvor gespeicherten Informationen seitens des Systemsteuergeräts zurückgegriffen wird, wonach der Assistenz erneut aktuell erfasste Informationen der Steuergeräte oder Aggregate zugrunde gelegt werden.

Moderne Kraftfahrzeuge sind mit diversen Assistenzsystemen ausgerüstet. Ein besonders beliebtes Assistenzsystem ist ein Einparkassistenzsystem, das den Rückwärtseinparkvorgang unterstützt oder komplett automatisch vornimmt. Ein solches System ist beispielsweise aus DE 10 2005 017 359 A1 bekannt. Das dortige System sieht eine Sicherheitsprüfung relevanter Systemparameter vor, wobei das Einparkassistenzsystem bei Bedarf, wenn also ein Fehlerfall gegeben ist, deaktiviert wird. Ein Deaktivieren des Einparkassistenzsystems erfolgt gemäß DE 10 2010 020 202 A1 auch, wenn ein Stehenbleibens des Motors erfasst wird. Ist das Einparkassistenzsystem währenddessen aktiv, wird es automatisch deaktiviert, ist es noch nicht aktiv, ist seine Aktivierung automatisch verhindert. Ein Stehenbleiben des Motors kann beispielsweise dann der Fall sein, wenn der Motor abgewürgt wird. Die Deaktivierung erfolgt aus Sicherheitsgründen und ist notwendig, weil Steuergeräte, die dem Systemsteuergerät des Einparkassistenzsystems z. B. von anderen Sensoren oder Aggregaten etc. Informationen liefern, im Fall eines Motorneustarts einen Reset durchführen. Dann ist nicht mehr gewährleistet, dass überhaupt Signale gesendet werden, oder dass die gesendeten Signale korrekt sind. Sind die Signale respektive Informationen nicht korrekt, könnte dies dazu führen, dass der Einparkvorgang fehlerhaft durchgeführt wird und es zur Beschädigungen am eigenen oder an fremden Fahrzeugen kommt. Infolge der gegebenen Deaktivierung und dem zwangsläufigen Abbruch eines zuvor eingeleiteten Einparkvorgangs, der über das System assistiert wird, wenn der Motor abgewürgt oder abgestellt wird, steht der Fahrer im Falle eines Neustarts folglich vor dem Problem, dass er, nachdem er z. B. zur Hälfte in die Parklücke eingefahren ist, nunmehr ohne das Assistenzsystem weiter einparken muss.

Aus US 2011/080 304 A1 ist ein Verfahren mit den Merkmalen des Oberbegriffs des Anspruchs 1 bekannt.

Der Erfindung liegt damit das Problem zugrunde, eine Verfügbarkeit des Einparkassistenzsystems sicherzustellen, auch wenn der Motor während eines laufenden Einparkvorgangs ausgeht, gleich aus welchem Grund.

Zur Lösung dieses Problems ist bei einem Verfahren der eingangs genannten Art erfindungsgemäß vorgesehen, dass im Systemsteuergerät laufend die von den anderen Steuergeräten oder Aggregaten gelieferten Informationen aktuell gespeichert werden, die Informationen einem fortgesetzten Einparkvorgang während eines definierten Zeitintervalls zugrunde gelegt werden und die während des laufenden Zeitintervalls eingehenden Informationen anderer Steuergeräte auf ihre Plausibilität insbesondere in Bezug auf die gespeicherten Informationen geprüft werden und bei positivem Prüfungsergebnis der assistierte Vorgang fortgesetzt wird, während er bei negativem Prüfungsergebnis abgebrochen wird.

Das erfindungsgemäße Verfahren sieht vor, die laufend von anderen Steuergeräten oder Aggregaten gelieferten Informationen nicht nur während des laufenden Einparkvorgangs im Rahmen der Assistenz zu verarbeiten, sondern sie auch zu speichern. Bei solchen Informationen handelt es sich primär um Status- oder Funktionsinformationen anderer Steuergeräte oder Aggregate, die beispielsweise anderen Assistenzsystemen zugeordnet sind, die aber für die Steuerung des Einparkvorgangs respektive dessen Assistenz erforderlich sind. Hierunter fallen auch Informationen über die Ist-Geschwindigkeit oder die eingelegte Fahrstufe und ähnliches. Wird nun aus welchen Gründen auch immer während des laufenden Einparkvorgangs der Verbrennungsmotor gestoppt, beispielsweise indem er abgewürgt wird, und erfolgt kurz darauf ein Neustart des Motors, so kann das Systemsteuergerät auf die in ihm zuletzt abgespeicherten Informationen zurückgreifen, und diese für ein vorbestimmtes, definiertes Zeitintervall der folgenden Assistenz des dann unmittelbar wieder aktivierten Einparkassistenzsystems zugrunde legen. D. h., dass das Systemsteuergerät quasi auf dem Status Quo aufsetzt, wie er unmittelbar vor dem Abschalten des Verbrennungsmotors zuvor gegeben war. Dies ermöglich es, einerseits unmittelbar die Assistenz wieder aufzunehmen, andererseits aber auch den anderen Steuergeräten, die die Informationen liefern, Zeit zugeben, den erforderlichen Reset durchzuführen, der aus sicherheitstechnischen Gründen erforderlich ist.

Diese "alten" Informationen werden wie beschrieben während eines definierten Zeitintervalls zugrunde gelegt. Das Zeitintervall ist so bemessen, dass nach Ablauf des Zeitintervalls sichergestellt ist, dass sämtliche Steuergeräte respektive Aggregate wieder aktiv sind, folglich wiederum aktuelle Informationen liefern können. Diese aktuellen Informationen werden spätestens nach Ablauf des Zeitintervalls dann der fortgesetzten Assistenz zugrunde gelegt. Sämtliche Informationen werden über einen Fahrzeugbus, beispielsweise den CAN-Bus, von den Steuergeräten oder Aggregaten zur Verfügung gestellt und können über den Bus vom Systemsteuergerät abgegriffen werden.

Zweckmäßigerweise findet eine Plausibilitätsprüfung der neuen, aktuell erfassten Informationen nach dem Wiederstart statt, insbesondere im Bezug auf die gespeicherten Informationen. Bei positivem Prüfungsergebnis wird der assistierte Vorgang fortgesetzt, bei negativem Prüfungsergebnis wird er abgebrochen. Dies deshalb, als es natürlich sein kann, dass im Rahmen des Resets eines externen Steuergeräts oder Aggregats ein Fehler auftaucht, sodass folglich die aktuelle gegebene Information entweder der Gestalt ist, dass sie einem Einparkassistenten nicht zugrunde gelegt werden kann, oder dass sie der Gestalt ist, dass sie mit der zuletzt erfassten "alten" und gespeicherten Information nicht kompatibel ist. Je nachdem wie ein solches Plausibilitätsprüfungsergebnis ausfällt, kann entweder die Einparkassistenz fortgesetzt oder abgebrochen werden.

Das Zeitintervall beträgt wenigstens 100ms und maximal 5s. Es ist vorzugsweise parametrierbar, d. h., es kann letztlich nach Bedarf eingestellt werden.

Im Rahmen dieser Parametrierung ist es denkbar, ein gemeinsames Zeitintervall für sämtliche Informationen respektive allen externen Steuergeräten/Aggregaten zugeordnet zu verwenden. D. h., unabhängig davon, von welchem Steuergerät nun eine "alte" Information noch vorliegt, dass diese Informationen allesamt gleich lange, nämlich während des einen einheitlichen Zeitintervalls, nach Wiederstart zugrunde gelegt werden.

Alternativ dazu ist es denkbar, für einzelne unterschiedliche Informationen individuell parametrierbare Zeitintervalle zu verwenden. Je nachdem, um welches Steuergerät bzw. Aggregat es sich handelt, das eine externe, im Rahmen der Einparkassistenz zu berücksichtigende Information liefert, kann der nach Wiederstart erfolgende Reset unterschiedlich lange dauern. So kann beispielsweise ein Getriebesteuergerät, das eine Information über die eingelegte Fahrstufe liefert, zumeist schneller den Reset durchführen, als ein einem elektronischen Stabilitätsprogramm zugeordnetes Steuergerät, also ein ESP-Steuergerät, das, da seine Aufgaben wesentlich komplexer sind, länger für den Reset braucht. Es ist nun denkbar, diesen unterschiedlichen Steuergeräten (natürlich aber auch anderen eingebundenen Steuergeräten oder Aggregaten) entsprechende individuelle und unterschiedlich lange Zeitintervalle zuzuordnen, die entsprechend parametriert werden können.

Als Informationen können, wie ausgeführt, unterschiedliche Informationen verwendet werden. Denkbar ist, als Information eine den Funktionsstatus eines einer elektronischen Parksperre zugeordneten Steuergeräts und/oder eine den Funktionszustand eines einem elektronischen Stabilitätsprogramm zugeordneten Steuergeräts und/oder eine die eingelegte Fahrstufe und/oder eine die Ist-Geschwindigkeit angebende Information zu erfassen und zu speichern. Die den Funktionsstatus angebenden Informationen geben letztlich die Funktionsbereitschaft des Betriebs- oder Assistenzsystems, dem das jeweilige Steuergerät zugeordnet ist, an. Ist z. B. ein im ESP-System integrierter Sensor defekt, so zeigt die Information einen Systemfehler insgesamt an, die Assistenz des Einparksystems entfällt dann. Darüber hinaus ist es natürlich auch zweckmäßig, zusätzlich zu diesen Informationen auch eine den Zustand des Systemsteuergeräts selbst anzeigende Information zu speichern und innerhalb des Intervalls zu berücksichtigen. Denn auch der eigene Funktionsstatus, der natürlich fehlerfrei sein muss, um die Assistenz vorzunehmen, kann zu berücksichtigen sein.

Neben dem Verfahren selbst betrifft die Erfindung ferner ein Kraftfahrzeug, das zur Durchführung dieses Verfahrens ausgebildet ist, folglich also ein Einparkassistenzsystem umfasst, mit einem Systemsteuergerät, dass den Einparkvorgang unterstützt oder automatisiert steuert, und dem über einen Fahrzeugbus Informationen anderer Steuergeräte oder Aggregate, die fahrzeugseitig verbaut sind, gegeben werden können. Dieses Systemsteuergerät ist in der Lage, die entsprechenden Informationen kontinuierlich zu speichern und sie im Fall eines unbeabsichtigten Motorstopps und Neustarts für ein vorgegebenes Zeitintervall zunächst zugrunde zulegen, bis die externen Steuergeräte/Aggregate nach Durchführung eines Resets im Rahmen des Neustarts wieder aktuelle Informationen liefern, die fortan dann der Assistenz zugrunde gelegt werden.

Weitere Vorteile, Einzelheiten und Merkmale der Erfindung ergeben sich aus den im Folgenden beschriebenen Ausführungsbeispiel sowie anhand der Zeichnungen. Dabei zeigen:
- Fig. 1: ein erfindungsgemäßes Kraftfahrzeug, und
- Fig. 2: ein Ablaufdiagramm zur Erläuterung des Verfahrens.

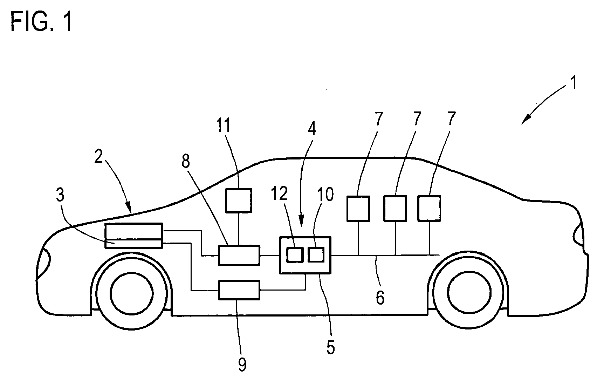

Fig. 1 zeigt ein erfindungsgemäßes Kraftfahrzeug 1 umfassend einen Verbrennungsmotor 2 mit zugeordnetem Getriebe 3 sowie ein Einparkassistenzsystem 4 mit einem Systemsteuergerät 5, das an einem Fahrzeugbus 6 hängt, an dem eine Reihe weiterer Steuergeräte 7 angeschlossen sind. Dem Verbrennungsmotor 2 ist ein Motorsteuergerät 8 und dem Getriebe 3 ein Getriebesteuergerät 9 zugeordnet.

Das Systemsteuergerät 5, das bei Aktivierung des Einparkassistenzsystems 4 automatisch einen Einparkvorgang steuert oder diesen, sofern er manuell erfolgt, zumindest unterstützt, empfängt zur Durchführung seiner Aufgaben laufend Informationen über den Bus 6 von den Steuergeräten 7 respektive von dem Motorsteuergerät 8 und dem Getriebesteuergerät 9. Diese werden laufend in einem Speicher 10 abgespeichert, wobei vorzugsweise nach Eingang einer aktuelleren Information eines Steuergeräts die zuvor gespeicherte überschrieben wird, sodass stets der aktuelle Informationsdatensatz vorliegt und gespeichert ist.

Kommt es nun während eines assistierten Einparkvorgangs zu einem Ausschalten des Verbrennungsmotors, sei es durch Abwürgen, sei es durch unabsichtliches Ausschalten der Zündung, so wird der Einparkvorgang unmittelbar beendet, d. h., die Assistenz wird abrupt beendet. Beginnt der Fahrer nun mit einem Neustart, wird also der Verbrennungsmotor wieder angelassen, so wird zunächst die Zündung 11 betätigt, die sodann ein Signal an das Motorsteuergerät 8 gibt, das daraufhin den Neustart veranlasst. Dieses an das Motorsteuergerät 8 gegebene Signal oder das vom Motorsteuergerät 8 gegebene Neustartsignal wird als Triggersignal für einen Timer 12 gewertet, der dem Systemsteuergerät 5 zugeordnet ist. Dieser Timer definiert ein Zeitintervall, innerhalb welchem die im Speicher 10 nach wie vor noch vorhandenen, aktuellen und unmittelbar vor dem unbeabsichtigten Ausschalten des Verbrennungsmotors 2 noch gespeicherten Informationen der diversen Steuergeräte ausgelesen werden und einer unmittelbaren weiterführenden Assistenz des Einparkassistenzsystems 4 zugrunde gelegt werden. D. h., dass das Systemsteuergerät 5 auf diese seinerzeit noch abgelegten Informationen zurückgreift. Die Steuergeräte 7 respektive das Steuergerät 8 und das Getriebesteuergerät 9 sind gegebenenfalls während einer kurzen Zeitspanne unmittelbar nach Gabe des Neustartsignals mit einem Reset beschäftigt, sind also nicht in der Lage, aktuell erfasste Informationen, vornehmlich eigene Zustandsinformationen hinsichtlich der Fehlerfreiheit des zugeordneten Systems, zu geben. Als diese Informationen werden nun aber seitens des Systemsteuergeräts 5 die "alten", unmittelbar vor dem Ausschalten des Motors 2 noch gespeicherten Informationen zugrunde gelegt. Dieses Zeitintervall kann minimal 100 ms betragen, es sollte maximal 5 s betragen, wobei einzelnen Steuergeräte unterschiedlich lange Zeitintervalle zugeordnet sein können, je nachdem wie schnell sie einen eigenen Reset durchführen können und fortan wieder aktuelle, insbesondere den eigenen Funktionszustand als fehlerfrei oder fehlerhaft beschreibende Informationen liefern können.

Das Systemsteuergerät 5 ist dabei in der Lage, eine Plausibilitätsprüfung durchzuführen, sobald die ersten aktuell erfassten Informationen wieder eingehen. Diese können beispielsweise mit den zuvor noch verwendeten, gespeicherten "alten" Informationen verglichen werden. Sollte eine Übereinstimmung gegeben sein, so können die Informationen fortan aktuell verwendet werden, falls nicht, kann der Einparkvorgang automatisch wieder sofort abgebrochen werden. Selbstverständlich werden die aktuell eingehenden Informationen ganz grundsätzlich auf ihren Inhalt seitens des Systemsteuergeräts 5 überprüft und nur dann zugrunde gelegt, wenn sie korrekten Inhalt sind, mithin also insbesondere die Fehlerfreiheit der Funktion der einzelnen Steuergeräte 7, 8 und 9 bzw. des zugeordneten Systems anzeigen.

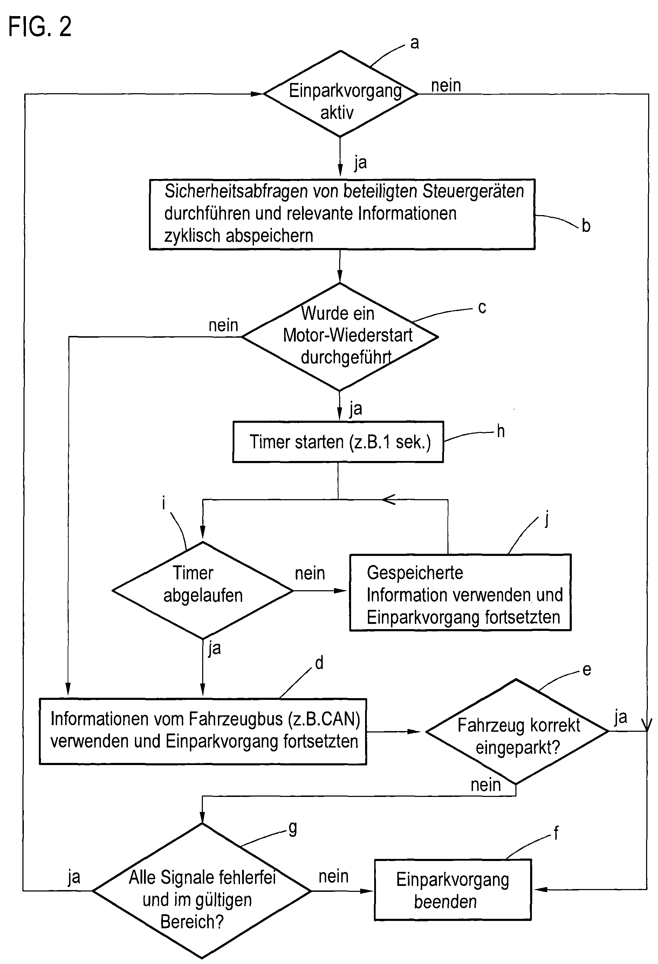

Fig. 2 zeigt ein Ablaufdiagramm, das den eigentlichen Betrieb des Einparkassistenzsystems 4 beschreibt. Im Schritt a wird überprüft, ob ein Einparkvorgang aktiv ist, mithin das Fahrerassistenzsystem 4 aktiviert ist. Ist dies der Fall (ja) so wird im Schritt b eine Sicherheitsabfrage durchgeführt, mithin also die beteiligten Steuergeräte 7, 8 und 9 abgefragt und relevante Informationen, die den jeweiligen Status anzeigen, zyklisch gespeichert.

Im Schritt c erfolgt die Abfrage, ob ein Motor-Wiederstart durchgeführt wurde. Falls dem nicht so ist (nein), was ja der Regelfall ist, so werden, siehe Schritte b, die vom Fahrzeugbus 6 nach wie vor eingehenden, aktuellen Informationen der Steuergeräte 7, 8 und 9 weiterhin verwendet, der Einparkvorgang wird fortgesetzt. Im Schritt e erfolgt schließlich die Abfrage, ob das Fahrzeug korrekt eingeparkt ist. Ist dies der Fall (ja) wird im Schritt f der Einparkvorgang beendet. Ist dies nicht der Fall (nein), so wird im Schritt g überprüft, ob alle Informationen (respektive Signale) fehlerfrei und im gültigen Bereich liegen. Falls dem so ist (ja) kehrt die Schleife zum Schritt a zurück. Ist dies nicht der Fall (nein), sind also fehlerhafte Statusinformationen abgegriffen worden (ein Steuergerät oder System arbeitet also nicht korrekt), so wird der Einparkvorgang wieder gemäß Schritt f beendet.

Ergibt sich im Schritt c, dass ein Motor-Wiederstart durchgeführt wurde (ja), was wie zuvor ausgeführt über ein entsprechendes Signal seitens der Zündung oder des Motorsteuergeräts unmittelbar erfasst wird, so wird der Timer 12 gemäß Fig. 1 gestartet (Schritt h), wobei das Zeitintervall hier als beispielsweise eine Sekunde dauernd angegeben ist.

Im Schritt i wird abgefragt, ob der Timer 12 abgelaufen ist. Ist dem nicht der Fall, was unmittelbar nach Starten des Timers der Fall ist (nein), so werden im Schritt j die gespeicherten Informationen, die im Speicher 10 des Systemsteuergeräts vorhanden sind, verwendet und der Einparkvorgang fortgesetzt. Es erfolgt eine fortwährende Abfrage, ob der Timer abgelaufen ist (Schritt i), wobei die gespeicherten Informationen solange verwendet werden, bis irgendwann der Timer und damit das Zeitintervall abgelaufen ist (ja nach Schritt i). Das Prozedere setzt sich dann wiederum mit dem Schritt d fort, wonach die aktuellen, von den nunmehr einen Reset beendeten und aktuelle Informationen liefernden Steuergeräten 7, 8 und 9 gegebenen Informationen wieder verwendet werden und der Einparkvorgang fortgesetzt wird, weitergeführt mit den Schritten e, f und g respektive mit erneuter Durchführung der Schleife.

## Patentansprüche

1. Verfahren zum Betrieb eines Kraftfahrzeugs umfassend ein Einparkassistenzsystem mit einem Systemsteuergerät, das während der assistierten Durchführung eines Einparkvorgangs eine oder mehrere Informationen von anderen Steuergeräten oder Aggregaten empfängt, sowie umfassend einen Verbrennungsmotor, wobei bei einem Wiederstart des zuvor während des laufenden Einparkvorgangs stehengebliebenen Verbrennungsmotors auf zuvor gespeicherte Informationen seitens des Systemsteuergeräts zurückgegriffen wird, wonach der Assistenz erneut aktuell erfasste Informationen der Steuergeräte oder Aggregate zugrunde gelegt werden,
**dadurch gekennzeichnet,**
**dass** im Systemsteuergerät laufend die von den anderen Steuergeräten oder Aggregaten gelieferten Informationen aktuell gespeichert werden, die Informationen einem fortgesetzten Einparkvorgang während eines definierten Zeitintervalls zugrunde gelegt werden und die während des laufenden Zeitintervalls eingehenden Informationen anderer Steuergeräte auf ihre Plausibilität insbesondere in Bezug auf die gespeicherten Informationen geprüft werden und bei positivem Prüfungsergebnis der assistierte Vorgang fortgesetzt wird, während er bei negativem Prüfungsergebnis abgebrochen wird.

2. Verfahren nach Anspruch 1,
**dadurch gekennzeichnet,**
**dass** das Zeitintervall wenigstens 100ms und maximal 5s beträgt.

3. Verfahren nach Anspruch 1 oder 2,
**dadurch gekennzeichnet,**
**dass** das Zeitintervall parametrierbar ist.

4. Verfahren nach Anspruch 1 oder 2,
**dadurch gekennzeichnet,**
**dass** das Zeitintervall für die einzelnen unterschiedlichen Informationen individuell parametrierbar ist.

5. Verfahren nach einem der vorangehenden Ansprüche,
**dadurch gekennzeichnet,**
**dass** als Informationen eine den Funktionszustand eines einer elektronischen Parksperre zugeordneten Steuergeräts und/oder eine den Funktionszustand eines einem elektronischen Stabilitätsprogramm zugeordneten Steuergeräts und/oder eine die eingelegte Fahrstufe und/oder eine die Ist-Geschwindigkeit angebende Information erfasst und gespeichert werden.

6. Verfahren nach einem der vorangehenden Ansprüche,
**dadurch gekennzeichnet,**
**dass** zusätzlich zu den Informationen auch eine den Zustand des Systemsteuergeräts selbst anzeigende Information gespeichert und innerhalb des Intervalls berücksichtigt wird.

7. Kraftfahrzeug, ausgebildet zur Durchführung des vorangehenden Verfahrens.

## Claims

1. Method of operating a motor vehicle including a parking assistance system with a system control unit receiving one or more items of information from other control units or units during an assisted parking manoeuvre, and including an internal combustion engine whereby in the event of a restart of the engine after a stall during the previous assisted parking manoeuvre, information previously stored by the system control unit is accessed, after which the newly-detected information from the control units or units is used as a basis by the assistance system, **characterised in that** the information continuously supplied to the system control unit from the other control units or units is stored at the time, the information is used as the basis of a continued parking manoeuvre for a defined time interval, and the information received from other control units during the current time interval is checked for plausibility, in particular in relation to the stored information, and in the event of a positive check result the assisted manoeuvre is continued, whereas in the event of a negative check result it is discontinued.

2. Method as in claim 1, **characterised in that** the time interval is at least 100 ms and a maximum of 5 s.

3. Method as in claim 1 or 2, **characterised in that** the time interval can be parameterised.

4. Method as in claim 1 or 2, **characterised in that** the time interval for the different items of information can be parameterised.

5. Method as in any of the above claims, **characterised in that** the items of information collected and stored are information indicating the functional status of a control unit allocated to an electronic parking brake, and/or the functional status of a control unit allocated to an electronic stability program, and/or the gear selected, and/or the actual speed.

6. Method as in any of the above claims, **characterised in that** in addition to the items of information, information about the status of the system control unit itself is stored and taken into account within the interval.

7. Motor vehicle constructed to carry out the above method.

## Revendications

1. Procédé de fonctionnement d'un véhicule automobile comprenant un système d'assistance au stationnement avec un appareil de commande du système, qui reçoit, au cours de la réalisation assistée d'une opération de stationnement, une ou plusieurs informations d'autres appareils de commande ou d'autres unités, et comprenant également un moteur à combustion, dans lequel, lors d'un redémarrage du moteur à combustion précédemment arrêté au cours de l'opération de stationnement en cours, on revient à des informations précédemment mémorisées côté appareil de commande du système, moyennant quoi les informations actuellement mémorisées des appareils de commande ou des unités sont à nouveau prises en compte pour l'assistance,
**caractérisé en ce que** :
les informations fournies par les autres appareils de commande ou les autres unités sont actuellement mémorisées couramment dans l'appareil de commande du système, les informations sont prises pour base d'une opération de stationnement poursuivie au cours d'un intervalle de temps défini et les informations d'autres appareils de commande intervenant au cours de l'intervalle de temps en cours sont testées quant à leur plausibilité en particulier par rapport aux informations mémorisées et, dans le cas d'un résultat d'essai positif, l'opération assistée est poursuivie, tandis qu'elle est interrompue lors d'un résultat d'essai négatif.

2. Procédé selon la revendication 1,
**caractérisé en ce que** :
l'intervalle de temps atteint au moins 100 ms et au maximum 5 s.

3. Procédé selon la revendication 1 ou 2,
**caractérisé en ce que** :
l'intervalle de temps peut être paramétré.

4. Procédé selon la revendication 1 ou 2,
**caractérisé en ce que** :
l'intervalle de temps peut être paramétré individuellement pour les différentes informations individuelles.

5. Procédé selon l'une quelconque des revendications précédentes,
**caractérisé en ce que** :
l'on enregistre et l'on mémorise comme informations une information indiquant l'état de fonctionnement d'un appareil de commande affecté à un frein de stationnement électronique et/ou une information indiquant l'état de fonctionnement d'un appareil de commande affecté à un programme de stabilité électronique et/ou une information indiquant la vitesse enclenchée et/ou une information indiquant la vitesse théorique.

6. Procédé selon l'une quelconque des revendications précédentes,
**caractérisé en ce que**,
en plus des informations, on mémorise une information montrant l'état de l'appareil de commande du système lui-même et on en tient compte dans l'intervalle.

7. Véhicule automobile conçu pour réaliser le procédé précité.
